# EUROPEAN PATENT SPECIFICATION

(11) **EP 1 431 212 B1**
(45) Date of publication and mention of the grant of the patent: **02.05.2007**
(21) Application number: 02775259.1
(22) Date of filing: 27.09.2002
(51) Int. Cl.: B65D 81/24, B32B 27/34, B32B 27/32, A22C 13/00

(54) **MULTILAYERED FILM FOR FOOD PACKAGING**
MEHRSCHICHTIGE FOLIE ZUR NAHRUNGSMITTELVERPACKUNG
FILM MULTICOUCHE POUR L'EMBALLAGE ALIMENTAIRE

(30) Priority: 28.09.2001 JP 2001298963
(43) Date of publication of application: 23.06.2004
(73) Proprietor: GUNZE LIMITED, Ayabe-shi, Kyoto, 623-0011 (JP); Gunze Kobunshi Corporation, Isehara-shi, Kanagawa 259-1132 (JP)
(72) Inventor: YABUTA, Hiroyuki, B- 3500 Hasselt (BE)
(74) Representative: Müller-Boré & Partner Patentanwälte
(86) International application number: PCT/JP2002/010120
(87) International publication number: WO 2003/029101

(56) References cited:
- DE-A1- 3 212 343
- JP-A- 10 004 866
- JP-A- 11 034 261
- JP-A- 62 016 356
- US-A- 4 303 711
- US-A- 5 747 124
- US-B1- 6 194 040

## Description

### TECHNICAL FIELD

The present invention relates to a food packaging multilayered film for use in food packaging. The multilayered film of the present invention is useful for packaging food, such as cheese, sausages, fish, etc., and particularly useful for packaging sausages.

### BACKGROUND ART

So far, casings made of a single layer of nylon have been known as casings for food such as sausages and the like. Nylon has the advantages of good adhesion to food such as sausages or the like, low oxygen permeability, and good printability. However, the high water vapor permeability of nylon allows moisture of foods such as sausages or the like to escape during long-term storage, thus causing hardening of the food surface and loss of food freshness.

When a pigment is used in a nylon casing, boiling a sausage, for example, may cause color migration to the packaged sausage or to the water boiling outside the casing.

US-B1-6 194 040 describes a multilayered sausage casing comprising two polyamide layers sandwiching first and second intermediate layers, the first intermediate layer comprising a blend of ethylene-vinyl alcohol, polyamide and a polyolefin resin.

US-A-5 747 124 disclosed an at least 4-layer co-extruded, sausage casing which comprises one or more outer layers containing a blend of polyolefine with a polyamide masterbatch.

EP-A-1 084 962 describes a multilayer tubular film to be used as a sausage casing, which comprises two outer polyamide-based layers sandwiching a core layer of polyamide. Polyolefin-based interlayers are inserted in between the polyamide layers to improve interlamina cohesion, as well as oxygen and water vapour permeabilities, the core polyamide layer is possibly pigmented using a masterbatch, which is exemplified as being either a polyolefine or a polyamide masterbatch.

An object of the present invention is to provide a multilayered film for food packaging which has excellent oxygen barrier properties, low water vapor permeability, a low degree of color migration to food, and excellent food concealing properties.

### DISCLOSURE OF THE INVENTION

The present invention provides a multilayered film for food packaging as follows:
Item 1: A multilayered film for food packaging, consisting of an inner layer, an intermediate layer and an outer layer, wherein the intermediate layer comprising polyamide blended with a polyolefin masterbatch is sandwiched between the inner layer comprising polyamide and the outer layer comprising polyamide.
Item 2: The film according to item 1, wherein the intermediate layer further comprises a binder.
Item 3: The film according to item 1, wherein the inner layer further comprises an anti-blocking agent.
Item 4: The film according to item 1, wherein the polyolefin masterbatch is a modified polyolefin masterbatch.
Item 5: A sausage casing made of a multilayered film according to any one of items 1 to 4.

In the present invention, examples of the polyamide used for the inner layer, outer layer and intermediate layer include nylon 6, nylon 66, nylon 610, nylon 11, nylon 12, MXD nylon (poly(m-xylylene adipamide)), and copolymers thereof, etc. The polyamides used for the inner layer, outer layer and intermediate layer may be the same or different.

A polyolefin masterbatch can be obtained by pre-dispersing in polyolefin a coloring material such as an organic or inorganic pigment or dye. The proportion of the pigment or dye in the polyolefin masterbatch is not restricted, but is preferably about 5% to about 70% by weight. Examples of the polyolefin include homopolymers of olefins, mutual copolymers of olefins, copolymers of olefins with other copolymerizable monomers such as other vinyl monomers etc., and modified polymers thereof, etc. More specifically, examples of the polyolefins are polyethylene (LDPE, LLDPE, etc.), polypropylene, polybutene, mutual copolymers thereof, ionomer resins, ethylene-acrylic acid copolymers, ethylene-vinyl acetate copolymers, modified polyolefin resins, etc. Typical examples of the modified polyolefin resins are modified polymers obtained by modifying the above-mentioned olefin homopolymers, copolymers or the like by copolymerization (for example, graft copolymerization) with unsaturated carboxylic acids such as maleic acid, fumaric acid and the like, or derivatives of unsaturated carboxylic acids such as acid anhydrides, esters, metal salts thereof, etc. The modified polyolefin resins may be these modified polymers alone or a mixture thereof with other components such as other polyolefin resins. Especially preferable polyolefin resins are low density polyethylene, linear low density polyethylene, ionomer resins, polyolefin resins modified by maleic acid, ethylene-vinyl acetate copolymers, etc.

Examples of the organic coloring agent or pigment include organic pigments such as azo pigments (soluble azo pigments, insoluble azo pigments (monoazo pigments and bisazo pigments), condensed azo pigments, metal complex salt azo pigments, and benzimidazolone pigments), polycyclic pigments (phthalocyanine pigments, anthraquinone pigments, indigo pigments, perinone pigments, perylene pigments, quinophthalone pigments, dioxazine pigments, quinacridone pigments, isoindolinone pigments, metal complex salt pigments, methine/azomethine pigments, and diketopyrrolopyrrole pigments), etc.; water-soluble dyes (basic dyes and acid dyes); and oil-soluble dyes (azo dyes, anthraquinone dyes, perylene dyes, etc.).

Examples of the inorganic pigment include metal oxides (titanium oxide pigments, iron oxide pigments, mixed metal oxide pigments, etc.), chromate pigments, sulfide pigments, silicate pigments, and carbonate pigments.

The intermediate layer preferably contains a binder. The binder to be used is not restricted as long as it improves compatibility between nylon and masterbatch. Examples of the binder include polyolefin resins modified by maleic acid, etc.

The intermediate layer preferably contains polyamide in an amount of 40% to 95% by weight, and more preferably in an amount of 50% to 95% by weight; a masterbatch in an amount of 2% to 20% by weight (coloring material content: about 2% to about 70% by weight, and preferably about 5% to about 70% by weight); and a binder in an amount of about 3% to about 58% by weight, and more preferably in an amount of about 3% to about 40% by weight. When the intermediate layer contains too small an amount of polyamide, the adhesiveness of the layer to the outer and inner layers is decreased. When the amount of polyamide in the intermediate layer is too large, the compatibility of the polyamide with the masterbatch is decreased.

If necessary, the inner layer may contain an anti-blocking agent. Examples of the anti-blocking agent include silica, starch, etc. The anti-blocking agent may be mixed into the polyamide of the inner layer or may be adhered to the inner layer surface. When the anti-blocking agent is mixed into the inner layer in advance, the agent is preferably used in an amount of about 0.1% to about 4% by weight, and more preferably in an amount of about 1.5% to about 3% by weight, relative to the weight of polyamide. When the anti-blocking agent is applied or sprayed to be adhered to the inner layer surface, the agent is preferably adhered in an average amount of about 0.3 g to about 3.5 g, and more preferably in an average amount of about 0.55 g to about 2.5 g, per square meter of inner layer surface.

Examples of the food to be packaged with the multilayered packaging film of the invention encompass processed meat products such as ham, sausages, bacon, etc.; processed fish products and fish paste products such as ***kamaboko*** (boiled fish paste), ***chikuwa*** (tube-shaped boiled fish paste), etc.; and dairy products such as cheese, etc. Examples of the form of the multilayered packaging film are casings, bags, etc. When a seamless tube is used as the multilayered plastic film, any method can be employed. For example, the tube can be cut to an appropriate length and used as a casing, or in a bag form, etc. When a flat film is used, the film can be appropriately formed into a package material, following conventional methods.

A preferable multilayered packaging film of the present invention is a heat-shrinkable film produced by carrying out machine direction (MD) stretching to 1 to 5 times and transverse direction (TD) stretching to 1 to 5 times.

The multilayered film of the invention preferably has an inner layer thickness of 3 to 20 µm, an outer layer thickness of 3 to 20 µm, and an intermediate layer thickness of 10 to 30 µm, with a total thickness of 16 to 50 µm, and more preferably a total thickness of 30 to 50 µm.

The present invention provides a multilayered film for food packaging which has low permeability to oxygen and water vapor, substantially no color migration to food, and excellent food concealing properties.

### BEST MODE FOR CARRYING OUT THE INVENTION

The present invention is described below in more detail with reference to Examples and Comparative Examples.

### Example 1

A multilayered film of the invention was obtained by using the following materials and carrying out MD stretching to 2.7 times and TD stretching to 2.5 times.
- Outer layer (thickness: 5 µm) :
   nylon 6 (trade name: KR4423; product of BASF AG)
- Inner layer (thickness: 5 µm) :
   nylon 6 (trade name: B4F; product of BASF AG) 100 parts, silica (140; anti-blocking agent; product of BASF AG) 2 parts
- Intermediate layer (thickness: 20 µm) :
   nylon 6 (trade name: B4F; product of BASF AG) 100 parts, ethylene-propylene random copolymer masterbatch (black; trade name: P7090; product of A. Schulman, Inc.) 2 parts, binder (trade name: BP330; product of Honan Petrochemical Corporation) 5 parts

### Examples 2 to 4

Following the procedure of Example 1 and using a white ethylene-propylene random copolymer masterbatch (Example 2; trade name: White-P-Type; product of A. Schulman, Inc.) or a red ethylene-propylene random copolymer masterbatch (Example 3; trade name: P594081; product of A. Schulman, Inc.) or the same amount of polyolefin binder resin (Example 4; corresponding to transparent; trade name: BP330; product of Honan Petrochemical Corporation) in place of the black ethylene-propylene random copolymer masterbatch used in Example 1, a multilayered film of the invention was produced.

### Example 5

Following the procedure of Example 1 and using a modified polyolefin masterbatch (base resin: PP adhesive resin); brown; trade name: BRNP00708/5SC1; product of A. Schulman, Inc.) in place of the ethylene-propylene random copolymer, a multilayered film of the invention was produced.

### Comparative Example 1

Following the procedure of Example 1 and using 100 parts of nylon 6 (trade name: B4F; product of BASF AG) and 10 parts of silica (140; anti-blocking agent; product of BASF AG), a single-layered film was produced (thickness: 35 µm).

### Test Example 1

The samples obtained in Examples 1 to 5 and Comparative Example 1 were tested for oxygen permeability and water vapor permeability. The test results are shown in Tables 1 and 2.

Oxygen permeability was measured using an "OX-TRAN Model 2/20" (product of Mocon, Inc.).

Water vapor permeability was measured under the conditions of 40°C and 90% RH, using a "PERMATRAN" (product of Mocon, Inc.).

**Table 1**

| Sample | Oxygen permeability (cc/m²·atm·24h) |
|---|---|
| Black (Example 1) | 25 |
| White (Example 2) | 26 |
| Red (Example 3) | 26 |
| Transparent (Example 4) | 26 |
| Brown (Example 5) | 26 |
| Single-layered nylon (Comparative Example 1) | 18 |

**Table 2**

| Sample | Water vapor permeability (g/m²·24h) |
|---|---|
| Black (Example 1) | 194.1 |
| White (Example 2) | 120.4 |
| Red (Example 3) | 152.1 |
| Transparent (Example 4) | 181.2 |
| Single-layered nylon (Comparative Example 1) | 382.6 |

### Test Example 2

The samples obtained in Examples 1 to 4 and Comparative Example 1 were tested for concealing properties (total light transmittance). The test results are shown in Table 3. Total light transmittance was measured in accordance with JIS K 7105, using a "DIRECT READING HAZE METER" (product of Toyo Seiki Seisaku-sho, Ltd.).

**Table 3**

| Sample | Total light transmittance (%) |
|---|---|
| Black (Example 1) | 0.5 |
| White (Example 2) | 46.1 |
| Red (Example 3) | 27.6 |
| Transparent (Example 4) | 88.3 |
| Single-layered nylon (Comparative Example 1) | 90.6 |

## Claims

1. A multilayered film for food packaging, consisting of an inner layer, an intermediate layer and an outer layer, wherein the intermediate layer comprising polyamide blended with a polyolefin masterbatch is sandwiched between the inner layer comprising polyamide and the outer layer comprising polyamide.

2. The film according to claim 1, wherein the intermediate layer further comprises a binder.

3. The film according to claim 1, wherein the inner layer further comprises an anti-blocking agent.

4. The film according to claim 1, wherein the polyolefin masterbatch is a modified polyolefin masterbatch.

5. A sausage casing made of a multilayered film according to any one of claims 1 to 4.

## Patentansprüche

1. Mehrschichtfolie zur Nahrungsverpackung, bestehend aus einer Innenschicht, einer Zwischenschicht und einer Außenschicht, wobei die Zwischenschicht, die Polyamid, das mit einer Polyolefingrundmischung gemischt ist, umfasst, zwischen der Polyamid umfassenden Innenschicht und der Polyamid umfassenden Außenschicht eingeschoben ist.

2. Folie nach Anspruch 1, wobei die Zwischenschicht weiter ein Bindemittel umfasst.

3. Folie nach Anspruch 1, wobei die Innenschicht weiter ein Antihaftmittel umfasst.

4. Folie nach Anspruch 1, wobei die Polyolefingrundmischung eine modifizierte Polyolefingrundmischung ist.

5. Wursthaut, hergestellt aus einer Mehrschichtfolie nach einem der Ansprüche 1 bis 4.

## Revendications

1. Feuille mince multicouche pour le conditionnement alimentaire, constituée par une couche interne, par une couche intermédiaire et par une couche externe, dans laquelle la couche intermédiaire comprenant du polyamide en mélange avec un mélange maître de polyoléfine est intercalée entre la couche interne comprenant du polyamide et la couche externe comprenant du polyamide.

2. Feuille mince selon la revendication 1, dans laquelle la couche intermédiaire comprend en outre un liant.

3. Feuille mince selon la revendication 1, dans laquelle la couche interne comprend en outre un agent s'opposant à l'adhérence entre feuilles.

4. Feuille mince selon la revendication 1, dans laquelle le mélange maître de polyoléfine est un mélange maître de polyoléfine modifiée.

5. Boyau pour saucisses, constitué d'une feuille mince multicouche selon l'une quelconque des revendications 1 à 4.
